# EUROPÄISCHE PATENTSCHRIFT

(11) **EP 1 586 168 B1**
(45) Veröffentlichungstag und Bekanntmachung des Hinweises auf die Patenterteilung: **20.03.2013**
(21) Anmeldenummer: 04702281.9
(22) Anmeldetag: 15.01.2004
(51) Int. Cl.: H04B 1/40, H04B 1/28

(54) **VORRICHTUNG IN EINER MOBILSTATION ZUM VERBINDEN EINES BASISBANDBAUTEILS UND EINES HOCHFREQUENZBAUTEILS MIT EINER DIGITALEN SCHNITTSTELLE**
DEVICE IN A MOBLE STATION FOR INTERCONNECTING A BASEBAND MODULE AND A HIGH FREQUENCY MODULE BY A DIGITAL INTERFACE
DISPOSITIF DANS UNE STATION MOBILE PERMETTANT DE RELIER UN COMPOSANT BANDE DE BASE ET UN COMPOSANT HAUTE FREQUENCE A UNE INTERFACE NUMERIQUE

(30) Priorität: 15.01.2003 DE 10301303
(43) Veröffentlichungstag der Anmeldung: 19.10.2005
(73) Patentinhaber: Intel Mobile Communications GmbH, 85579 Neubiberg (DE)
(72) Erfinder: PILGRAM, Berndt, 80798 München (DE); WENZEL, Dietmar, 81549 München (DE)
(74) Vertreter: Patentanwälte Lambsdorff & Lange
(86) Internationale Anmeldenummer: PCT/DE2004/000041
(87) Internationale Veröffentlichungsnummer: WO 2004/066515

(56) Entgegenhaltungen:
- WO-A-02/075947
- WO-A-02/091601
- US-A- 5 867 535
- US-A1- 2002 193 140
- LUCENT: "W7020 BLUETOOTH RADIO MODULE" LUCENT TECHNOLOGIES, BELL LABS INNOVATIONS, Dezember 1999 (1999-12), XP002207699

## Beschreibung

Die vorliegende Erfindung betrifft eine Empfangs- und Sendeanordnung zum Verarbeiten von Signalen, insbesondere zum Verarbeiten von Signalen in einer Mobilstation. Im Mobilfunk unterscheidet man üblicherweise zwischen Mobilstationen und Basisstationen, wobei mehrere Mobilstationen gleichzeitig mit einer Basisstation bzw. einer Feststation kommunizieren können.

Innerhalb von Sende- und Empfangseinrichtungen in Mobilstationen werden Modulatoren und Demodulatoren eingesetzt, welche eine Trägerschwingung und empfangene Daten gemäß standardisierten Modulations- und Demodulationsverfahren entsprechend den zu übertragenden Daten modulieren und entsprechend den empfangenen Daten demodulieren. Bekannte Modulations- und Demodulationsverfahren sind beispielsweise GSM (Global System for Mobile Communication), EDGE (Enhanced Data Rates for GSM Evolution), TIA-EIA 136 (Telecommunication Industry Associations/Electronic Industry Association), UTRA FDD (UMTS-Terrestrial Radio Access Frequency Division Duplex), UTRA TDD (UMTS-Terrestrial Radio Access Time Division Duplex) und IS-95. Im Allgemeinen bestehen diese Modulatoren und Demodulatoren aus mehreren Funktionseinheiten, beispielsweise einem Basisbandbauteil, der aus den zu übertragenden Daten mit Hilfe digitaler Signalverarbeitung ein standardkonformes, meist komplexwertiges Signal erzeugt, und einem Hochfrequenzbauteil, welches dieses komplexwertige Signal in eine hochfrequente Lage verschiebt und als reellwertiges Signal nach geeigneter Verstärkung über eine Antenne sendet. Entsprechend werden die empfangenen Nutzdaten vom Hochfrequenzbauteil in ein komplexwertiges Signal demoduliert, und die empfangenen demodulierten Daten in einem Basisbandbauteil weiterverarbeitet. Die Daten werden jeweils über einen Funkkanal gesendet.

Aufgrund unterschiedlicher physikalischer Anforderungen an die Basisband- und Hochfrequenzbauteile werden diese Funktionseinheiten meist in separaten integrierten Schaltkreisen mit unterschiedlichen Herstellungstechnologien realisiert. In Senderichtung muss das modulierte Basisbandsignal in geeigneter Form dann an das Hochfrequenzbauteil übergeben werden. In Empfangsrichtung muss das demodulierte Hochfrequenzsignal in geeigneter Form an das Basisbandsignal übergeben werden. Dabei ist zwischen Basisbandbauteil und Hochfrequenzbauteil eine geeignete Schnittstelle vorzusehen, die derzeit üblicherweise in Form einer analogen Signalschnittstelle realisiert ist. Die Basisbandsignale werden dabei üblicherweise an dieser analogen Schnittstelle als komplexwertige Basisbandsignale bereitgestellt, die in einen Realteil und einen Imaginärteil, als sogenanntes IQ-Signal mit einer Inphase-Komponente und einer hierzu um 90° phasenverschobenen Quadraturkomponente zerlegt werden. I- und Q-Komponenten werden dabei meistens jeweils als Differenzsignal übertragen; so dass wiederum je zwei Leitungen vorzusehen sind.

Aus der deutschen Offenlegungsschrift DE 100 35 116 A1 ist eine Hochfrequenz-Schnittstelle für Dual-Standard BasisbandChips in Mobilfunkgeräten bekannt. Bei dem Signalbussystem zur Übertragung von Empfangssignalen und Sendesignalen von der Hochfrequenzseite zur Basisbandseite bzw. umgekehrt, ist die Schnittstelle vollständig analog ausgebildet. Neben dem Nachteil der vollständig analogen Ausbildung der Schnittstelle, ist darüber hinaus auch die hohe Anzahl an erforderlichen Signalverbindungen zwischen der Hochfrequenzseite und der Basisbandseite ein wesentlicher Nachteil, insbesondere im Hinblick auf die daraus resultierende relativ geringe Flexibilität der Anordnung und dem relativ großen Platzbedarf. Des Weiteren ist es erforderlich, relativ hochwertige analoge Signalverarbeitungskomponenten, wie bspw. Digital/Analog- und Analog/Digital-Umsetzer, im Basisbandbaustein und im Hochfrequenzbaustein einzusetzen.

Weiterhin müssen im Basisbandschaltungsteil üblicherweise besondere Signalverarbeitungsschritte im Hinblick auf den Hochfrequenzbauteil vorgenommen werden, um Unzulänglichkeiten, Nicht-Idealitäten oder Toleranzen im Hochfrequenzbauteil voraus zu kompensieren oder voraus zu korrigieren. Der Basisbandteil kann folglich nicht mehr unabhängig vom Hochfrequenzteil betrachtet, analysiert und entwickelt werden. Aufgrund dieser fortschreitenden Entwicklung auf dem Gebiet der digitalen Signalverarbeitung und der Modulatorkonzepte steigt der Anteil der Verarbeitung im Basisband im Verhältnis zum Gesamt-Signalverarbeitungspfad immer mehr an, speziell im Hinblick auf das Zusammenwirken mit dem Hochfrequenzteil. Daraus resultiert eine unerwünschte, eingeschränkte Flexibilität von Basisbandbausteinen bzw. Basisbandchips, da die Basisbandbausteine nur noch gemeinsam mit derjenigen Hochfrequenzbaugruppe einsetzbar sind, für die sie speziell entwickelt wurden.

Die Druckschrift WO 02/091601 A beschreibt eine Empfangs- und Sendeanordnung bestehend aus einem Basisband-Bauteil und einem Hochfrequenz-Bauteil, welche über eine Schnittstelle miteinander verbunden sind. Diese Schnittstelle umfasst eine erste und eine zweite digitale Mehrleiterverbindung, eine unidirektionale Synchronisationsleitung und eine unidirektionale digitale Signalleitung zur Aktivierung des HochfrequenzBauteils. Die Anordnung enthält außerdem einen Empfangspuffer im Hochfrequenz-Bauteil, in den zu sendende Daten vom Basisband-Bauteil übertragen werden. Die Übertragung wird durch eine digitale Unterbrechungsanforderungs- (Interrupt-) Leitung zwischen Basisband-Bauteil und Hochfrequenz-Bauteil veranlasst.

Aufgabe der Erfindung ist es, eine Empfangs- und Sendeanordnung zum Verarbeiten von Signalen, insbesondere für den Mobilfunk, zu schaffen, welche eine vom Hochfrequenzteil unabhängige Basisbandverarbeitung ermöglicht und mit geringem Aufwand, insbesondere einer geringen Pinzahl, realisierbar ist.

Diese Aufgabe wird durch eine Empfangs- und Sendeanordnung zum Verarbeiten von Signalen mit den Merkmalen des Patentanspruchs 1 gelöst. Vorteilhafte Weiterbildungen und Ausgestaltungen sind Gegenstand von Unteransprüchen.

Eine erfindungsgemäße Empfangs- und Sendeanordnung (nachfolgend auch "Vorrichtung" genannt) zum Verarbeiten von Signalen, insbesondere für den Mobilfunk, weist ein Basisbandbauteil zum Verarbeiten eines Empfangssignals mit einem zur digitalen Datenübertragung ausgebildeten Ein-/Ausgang auf. Ferner umfasst die Vorrichtung ein Hochfrequenzbauteil zum Umsetzen des Empfangssignals in ein Basisbandsignal, wobei das Hochfrequenzbauteil einen zur digitalen Datenübertragung ausgebildeten Ein-/Ausgang aufweist, welcher mit dem Ein-/Ausgang des Basisbandbauteils zur digitalen Übertragung von zu empfangenen Nutzdaten elektrisch verbunden ist. Unter den empfangenden Nutzdaten sind diejenigen Daten zu verstehen, mit denen im Hochfrequenzteil eine Trägerfrequenz moduliert wird.

Die erfindungsgemäße Vorrichtung kann mit einer geringen Anzahl an Leitungen realisiert werden. Des Weiteren ermöglicht die digital realisierte Schnittstelle zwischen dem Basisbandbauteil und dem Hochfrequenzbauteil eine Übertragung von empfangenen Nutzdaten vom Hochfrequenzteil an den Basisbandteil, sowie das Übertragen von Konfigurationsdaten. Die digitale Schnittstelle zwischen dem Basisbandbauteil und dem Hochfrequenzbauteil kann derart realisiert werden, dass die digitale Schnittstelle eine möglichst niedrige Datenrate aufweist. Ein besonderer Vorteil der erfindungsgemäßen Vorrichtung zeigt sich dadurch, dass die digitale Schnittstelle zwischen Basisbandbauteil und Hochfrequenzbauteil eine vom Hochfrequenzteil unabhängige Basisbandverarbeitung ermöglicht. Der Basisbandbauteil ist vollständig mit digitalen Schaltungskomponenten realisiert, so dass eine hohe Integrationsdichte ermöglicht wird und eine weitgehende Unabhängigkeit von Fertigungsstreuungen erzielt werden kann. Die Schnittstelle zwischen Basisbandbauteil und Hochfrequenzbauteil kann dadurch völlig ohne analoge Komponenten ausgebildet sein. Es wird gewährleistet, dass einerseits die Übermittlung von Modulationsdaten als auch von Konfigurationsdaten vom Basisbandteil an den Hochfrequenzteil sowie andererseits die Übermittlung von Empfangsdaten vom Hochfrequenzteil an den Basisbandteil digital erfolgen kann.

Des Weiteren ermöglicht die erfindungsgemäße Vorrichtung, dass diejenigen Signalverarbeitungsschritte auf physikalischer Ebene, die der Schicht 1 im OSI-Schichtmodell entsprechen, wie beispielsweise Modulation, Vorauskorrektur und Kompensation sowie Impulsformung mit beschriebenen, digitalen Schnittstellen, vollständig im Hochfrequenzbauteil und demnach unabhängig vom Basisbandbauteil ausgeführt werden können. Es kann auch gewährleistet werden, dass im Basisbandbauteil Signalverarbeitungsschritte auf Informationsbit-Ebene durchgeführt werden, wie beispielsweise die Bildung von Transportblöcken, Kanalkodierung wie beispielsweise Faltungs-und/oder Turbokodierung, Adaption der Bitrate, Fehlerschutzkodierung, Verschachtelung (Interleaving), Rahmen- und Paketsegmentierung sowie Transportstrom-Multiplexbildung.

Die Vorrichtung zum Verarbeiten von Signalen ermöglicht ein wesentlich vereinfachtes Schaltungs-Layout sowie ein wesentlich vereinfachtes Schaltungsdesign im Basisbandbauteil und im Hochfrequenzbauteil. Die digitale Schnittstelle erlaubt einen Echtzeitbetrieb und zeigt eine wesentlich höhere Flexibilität dadurch, dass diejenigen digitalen Signalverarbeitungsschritte zur Kompensation und/oder Vorauskorrektur der Hochfrequenzsignale direkt in der Hochfrequenzbaugruppe, d.h. im Hochfrequenzbauteil durchgeführt werden können. Dadurch wird ermöglicht, dass ein Basisbandbauteil je nach Anwendungsfall mit unterschiedlichen Hochfrequenzbauteilen gekoppelt werden kann. Ein weiterer Vorteil ist darin zu sehen, dass ein Anpassen an zukünftige Fertigungsprozesse und Fertigungstechnologien mit höheren Intergrationsdichten mit sehr geringem Aufwand realisiert werden kann. Das Hochfrequenzbauteil und das Basisbandbauteil können dabei voneinander separierte integrierte Schaltungen sein. Die erfindungsgemäße Vorrichtung ist derart ausgebildet, dass sie bevorzugt für den Einsatz in Mobilfunkstationen ausgelegt ist, die einen oder mehrere der Mobilfunkstandards GSM, EDGE, TIA/EIA-136, UTRA FDD, UTRA TDD oder IS-95, unterstützen. Die Vorrichtung kann somit in einer Ausführung als Empfangsanordnung zum Verarbeiten von insbesondere Empfangssignalen in Mobilstationen ausgebildet sein.

Erfindungsgemäß weist die Vorrichtung eine erste digitale Mehrleiterverbindung zur Übertragung der empfangenen Nutzdaten von dem Hochfrequenzbauteil zum Basisbandbauteil auf. Darüber hinaus umfasst die Vorrichtung in vorteilhafter Weise eine zweite digitale Mehrleiterverbindung zur Übertragung von Konfigurationsdaten von dem Basisbandbauteil zum Hochfrequenzbauteil, wobei die erste und die zweite digitale Mehrleiterverbindung mit dem Ein-/Ausgang des Hochfrequenzbauteils und dem Ein-/Ausgang des Basisbandbauteils verbunden sind. Mit den Konfigurationsdaten werden diejenigen Daten bezeichnet, mit denen das Hochfrequenzbauteil konfigurierbar ist. Beispielsweise ist dies die Modulationsart im Sender, der Sendeleistungsverlauf, der Sendezeitpunkt, die Amplitude, die Sendebetriebsart, das Ein- und Ausschalteverhalten des Senders, die Sendedauer etc..

Durch die beiden unabhängigen digitalen Mehrleiterverbindungen ist es möglich, eine separierte Übertragung von Nutzdaten und Konfigurationsdaten durchzuführen. Da im Allgemeinen die Nutzinformationen von einem digitalen Signalprozessor im Basisbandbauteil verarbeitet werden und die Konfigurationsinformationen von einem Mikroprozessor im Basisbandbauteil unabhängig davon bereitgestellt werden, können die empfangenen Nutzdaten über die getrennte erste digitale Mehrleiterverbindung vom Hochfrequenzbauteil zum Basisbandbauteil übertragen werden. In vorteilhafter Weise werden die empfangenen Nutzdaten und die Konfigurationsdaten mit telegrammorientierten oder paketorientierten Übertragungsprotokollen über die digitale Schnittstelle getrennt übertragen. Die erste und die zweite digitale Mehrleiterverbindung können über einen einzigen Ein-/Ausgang mit dem Hochfrequenzbauteil elektrisch verbunden sein. Es kann jedoch auch vorgesehen sein, dass die erste digitale Mehrleiterverbindung mit einem ersten Ein-/Ausgang des Hochfrequenzbauteils verbunden ist, und die zweite digitale Mehrleiterverbindung mit einem zweiten Ein-/Ausgang des Hochfrequenzbauteils verbunden ist. In analoger Weise kann vorgesehen sein, dass die erste und die zweite digitale Mehrleiterverbindung mit einem einzigen Ein-/Ausgang des Basisbandbauteils oder mit jeweils einem separaten Ein-/Ausgang des Basisbandbauteils verbunden sind.

In bevorzugter Weise umfasst die erste digitale Mehrleiterverbindung zumindest eine Datenleitung, die zur seriellen Übertragung der empfangenen Nutzdaten ausgebildet ist. Zusätzlich weist die erste digitale Mehrleiterverbindung eine Bittaktleitung auf, die zur Übertragung eines Taktsignals ausgebildet ist, wobei je eine Taktperiode je einem Bit der Datenleitung zugeordnet ist. Des Weiteren umfasst die erste digitale Mehrleiterverbindung eine Worttaktleitung, die zum Anzeigen des Übermittlungsbeginns einer Folge von Bits auf der Datenleitung ausgebildet ist. Die über die Datenleitung zu übertragenden Daten, insbesondere die empfangenen Nutzdaten, können in Übertragungseinheiten (Telegrammen) aufgebaut sein, welche jeweils beispielsweise seriell angeordnete 16 Bit umfassen. Ein Signalpuls (Burst) der Schaltung kann selbst wiederum, beispielsweise beim Funkstandard GSM, eine Folge von insgesamt 11 Telegrammen mit je einer Länge von 16 Bits umfassen.

In vorteilhafter Weise weist die Vorrichtung zum Verarbeiten von Signalen eine zweite digitale Mehrleiterverbindung auf, die eine Datenleitung umfasst, welche zur seriellen Übertragung der Konfigurationsdaten ausgebildet ist. Als weiteres weist die zweite digitale Mehrleiterverbindung eine Bittaktleitung auf, die zur Übertragung eines Taktsignals ausgebildet ist, wobei je eine Taktperiode je einem Bit dieser Datenleitung zugeordnet ist. Ferner umfasst die zweite digitale Mehrleiterverbindung eine Worttaktleitung, die zum Anzeigen des Übermittlungsbeginns einer Folge von Bits auf der Datenleitung der zweiten digitalen Mehrleiterverbindung ausgebildet ist. Dadurch kann ermöglicht werden, dass neben den empfangenen Nutzdaten auch die Konfigurationsdaten über eine aus drei Signalleitungen aufgebaute digitale Schnittstelle übertragen werden. Auch bei den Konfigurationsdaten ist das Übertragungsprotokoll in vorteilhafter Weise in Telegrammen organisiert. Bei der Organisation der Übertragungsprotokolle können Einzeltelegramme oder auch ein Verbund aus unmittelbar aufeinander folgenden Telegrammen verwendet werden. Da bei der erfindungsgemäßen Vorrichtung die Nutzdatenübertragung vollständig unabhängig von der Datenübertragung der Konfigurationsdaten durchgeführt werden kann, ist es auch möglich, dass beispielsweise ein Mikroprozessor im Basisbandbauteil Signalparameter an den Hochfrequenzbauteil zu bestimmten Zeitpunkten überträgt, wobei die Zeitpunkte durch den Mikroprozessor vorgegeben werden. Dabei kann gewährleistet werden, dass der digitale Signalprozessor im Basisbandbauteil unbeeinflusst bleibt und keine Nutzdatenübertragung- oder Verarbeitungsunterbrechung durchgeführt werden müssen. Dadurch kann eine wesentliche Vereinfachung des zeitlichen Ablaufs und der Koordinierung der Vorgänge im Basisbandbauteil erreicht werden.

In einem besonders bevorzugtem Ansführungsbeispiel sind die Ein-/Ausgänge des Basisbandbauteils und des Hochfrequenzbauteils für eine bidirektionale Datenübertragung ausgelegt. In besonders bevorzugter Weise ist die Vorrichtung als Empfangs- und Sendeanordnung ausgebildet, wobei das Basisbandbauteil zusätzlich zum Verarbeiten eines Basisbandsignals ausgebildet ist. Des Weiteren ist das Hochfrequenzbauteil zusätzlich zum Umsetzen des Basisbandsignals in ein hochfrequentes Sendesignal ausgelegt. Dadurch kann erreicht werden, dass sowohl die Schnittstelle des Empfangspfades durch eine digitale Schnittstelle realisiert ist als auch die Schnittstelle des Sendepfades als digitale Schnittstelle ausgebildet ist. Daher werden sowohl die empfangenen Nutzdaten als die zu sendenden Nutzdaten über digitale Schnittstellen zwischen dem Basisbandbauteil und dem Hochfrequenzbauteil übertragen. Indem sowohl die Sende- als auch die Empfangsanordnung digitale Schnittstellen aufweist, kann die Vorrichtung mit verringerter Leitungszahl und erhöhter Flexibilität sowie geringerem Realisierungsaufwand aufgebaut werden.

In besonders vorteilhafter Weise ist die erste und die zweite Mehrleiterverbindung für eine bidirektionale Signalübertragung ausgebildet. Vorteilhaft ist es, die Datenleitung der ersten Mehrleiterverbindung bidirektional auszulegen, wobei dadurch ermöglicht wird, dass über die Datenleitung auch eine serielle Übertragung von zu sendenden Nutzdaten ermöglicht wird. Unter zu sendenden Nutzdaten sind die Daten zu verstehen, mit denen im Hochfrequenzbauteil eine Trägerfrequenz moduliert und über eine Antenne gesendet werden. Des Weiteren kann vorgesehen sein, dass die Datenleitung der zweiten Mehrleiterverbindung bidirektional ausgebildet ist, wodurch ermöglicht wird, dass zusätzlich eine serielle Übertragung von Konfigurationsdaten ermöglicht wird. Durch die bidirektionale Ausführung der Datenleitung der ersten Mehrleiterverbindung können sowohl Empfangsdaten vom Hochfrequenzbauteil zum Basisbandbauteil als auch Sendedaten vom Basisbandbauteil zum Hochfrequenzbauteil übertragen werden. Es kann auch vorgesehen sein, dass die erste Mehrleiterverbindung zwei Datenleitungen aufweist, wobei über eine der Datenleitungen nur die Sendedaten übertragen werden und über die zweite Datenleitung nur die Empfangsdaten übertragen werden.

Des Weiteren wird durch die bidirektionale Ausführung der Datenleitung der zweiten Mehrleiterverbindung ermöglicht, dass sowohl Konfigurationsdaten vom Hochfrequenzbauteil zum Basisbandbauteil als auch vom Basisbandbauteil zum Hochfrequenzbauteil übertragen werden. Daraus resultiert eine wesentlich höhere Flexibilität und ein größerer und erweiterter Einsatzbereich sowohl des Basisbandbauteils als auch des Hochfrequenzbauteils. Indem die Empfangsdaten beim Empfang sofort vom Hochfrequenzbauteil über die Datenleitung der ersten Mehrleiterverbindung zum Basisbandbauteil übertragen werden, resultiert ein verringerter Datenspeicherbedarf im Hochfrequenzbauteil, da Sende- und Empfangsdaten im Basisbandbauteil zwischengespeichert werden können. Daraus resultiert wiederum eine höhere Flexibilität bei der Wahl der Technologie des Hochfrequenzbauteils. Da des Weiteren keine analogen Komponenten für Sende- und Empfangspfad im Basisbandbauteil mehr erforderlich sind, ist der Basisbandbauteil mit einfacheren, kostengünstigeren Herstellungstechnologien für ausschließlich digitale Schaltungen realisierbar. Die erfindungsgemäße Vorrichtung zum Verarbeiten von Signalen kann somit einerseits als Empfangsanordnung mit einer digitalen Schnittstelle des Empfangspfads ausgebildet sein. In vorteilhafter Weise kann die Vorrichtung auch als Sende- und Empfangsanordnung ausgebildet sein, bei der der Sendepfad und der Empfangspfad mittels einer digitalen Schnittstelle realisiert sind.

In besonders vorteilhafter Weise sind für den Sendepfad als auch für den Empfangspfad jeweils genau eine Leitung für die empfangenen Nutzdaten sowie für die zu sendenden Nutzdaten in Form der Datenleitung der ersten Mehrleiterverbindung bereitgestellt. Ebenso kann bevorzugter Weise vorgesehen sein, dass genau eine Leitung für die Konfigurationsdaten, die durch die Datenleitung der zweiten Mehrleiterverbindung realisiert ist, bereitgestellt werden. Dadurch kann die Anzahl an Signalleitungen, insbesondere der Datenleitungen, zwischen dem Basisbandbauteil und dem Hochfrequenzbauteil erheblich reduziert werden.

Des Weiteren weist die Vorrichtung in vorteilhafter Weise eine Synchronisationsleitung zum Synchronisieren der Nutzdaten im Hochfrequenzbauteil auf. Die Synchronisationsleitung ist mit den Ein-/Ausgängen des Hochfrequenzbauteils und dem Ein-/Ausgang des Basisbandbauteils elektrisch verbunden. Des Weiteren kann vorgesehen sein, dass die Vorrichtung eine digitale Signalleitung zum Unterbrechen oder Auslösen einer Signalübertragung zwischen dem Hochfrequenzbauteil und dem Basisbandbauteil umfasst. Diese zusätzliche digitale Signalleitung ist mit dem Ein-/Ausgang des Hochfrequenzbauteils und dem Ein-/Ausgang des Basisbandbauteils elektrisch verbunden. Mit der Synchronisationsleitung kann Synchronisationsinformation übertragen werden, die den Zeitpunkt des jeweiligen Sendebeginns und -endes ausgangsseitig am Hochfrequenzbauteil festlegen. Beispielsweise kann dadurch eine Synchronisation mit den Zeitschlitzen eines zugrunde gelegten Funkstandards durchgeführt werden. Mit der zusätzlichen digitalen Signalleitung zum Unterbrechen oder Auslösen einer Signalübertragung kann beispielsweise veranlasst werden, dass die Datenübertragung zwischen dem Basisbandbauteil und dem Hochfrequenzbauteil wieder aufgenommen wird oder unterbrochen wird.

In bevorzugter Weise sind die Ein- und Ausgänge des Hochfrequenzbauteils und des Basisbandbauteils für eine serielle Datenübertragung ausgelegt. Durch eine serielle Datenübertragung, insbesondere eine serielle digitale Datenübertragung, kann ermöglicht werden, dass aufgrund der geringen zu übertragenden Datenmenge digitale Übertragungsverfahren mit standardisierten Übertragungsprotokollen eingesetzt werden können.

Es kann auch vorgesehen sein, dass die Worttaktleitungen den Beginn eines neuen Wortes, insbesondere eines 16-Bit-Wortes durch einen Flankenwechsel im Taktsignal, insbesondere einen Flankenwechsel von einem niedrigen Pegel auf einen hohen Pegel kennzeichnen. Des Weiteren kann vorgesehen sein, dass für mindestens eine Signalverbindung zwischen dem Hochfrequenzbauteil und dem Basisbandbauteil, und insbesondere für die Datenleitung der ersten Mehrleiterverbindung, ein Flankenformungsverfahren bzw. ein Impulsformungsverfahren zur Reduktion von Störemissionen verwendet wird.

Besonders vorteilhaft erweist es sich, wenn mindestens eine Signalverbindung zwischen dem Basisbandbauteil und dem Hochfrequenzbauteil als differentielle Signalleitung bzw. als Doppelleitung ausgebildet ist. Insbesondere ist es vorteilhaft die Datenleitung der ersten digitalen Mehrleiterverbindung, welche zur seriellen Übertragung der Nutzdaten ausgebildet ist, als differentielle Signalleitung auszubilden.

Vorteilhaft ist es weiterhin, wenn für mindestens eine Signalverbindung zwischen dem Basisbandbauteil und dem Hochfrequenzbauteil, insbesondere für die Datenleitung der ersten digitalen Mehrleiterverbindung ein Signalflanken- oder Signalimpulsformungsverfahren verwendet wird.

In einem vorteilhaften Ausführungsbeispiel ist die erfindungsgemäße Vorrichtung in einer Mobilstation angeordnet, wobei die Mobilstation zur Kommunikation, insbesondere zur drahtlosen Übertragung von Signalen, mit einer Basisstation ausgelegt ist. Die erfindungsgemäße Vorrichtung in der Mobilstation kann auch hier als Sende- und Empfangsanordnung oder lediglich als Empfangsanordnung ausgebildet sein.

Ein Ausführungsbeispiel der Erfindung wird nachfolgend anhand schematischer Zeichnungen näher erläutert. Es zeigen.
- Fig. 1: ein Blockschaltbild einer ersten Ausführungsform der erfindungsgemäßen Vorrichtung;
- Fig. 2: eine beispielhafte Signalverlaufdarstellung der ersten digitalen Mehrleiterverbindung zur Übertragung der Nutzdaten über die digitale Schnittstelle gemäß Fig. 1;
- Fig. 3: eine beispielhafte Darstellung von Signalverläufen der zweiten digitalen Mehrleiterverbindung zur Übertragung der Konfigurationsdaten über die digitale Schnittstelle gemäß Fig. 1; und
- Fig. 4: eine Darstellung der Signalverläufe zur Übertragung von Konfigurationsdaten, Nutzdaten, Synchronisationsdaten sowie einen prinzipiellen Verlauf einer Sendeleistung über die digitale Schnittstelle gemäß Fig. 1.

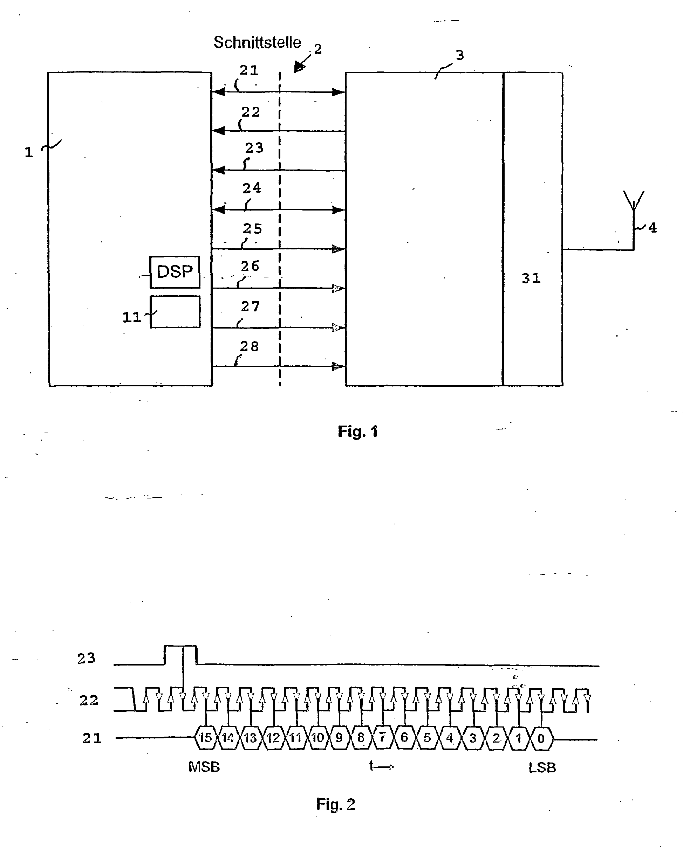

Eine erfindungsgemäße Vorrichtung zum Verarbeiten von Signalen für den Mobilfunk (Fig. 1) weist ein Basisbändbauteil 1 auf. Das Basisbandbauteil 1 ist über eine digitale Schnittstelle 2 mit einem Hochfrequenzbauteil 3 verbunden. Das Basisbandbauteil 1 dient zur digitalen Verarbeitung von zu sendenden Nutzdaten und von empfangenen Nutzdaten und umfasst einen digitalen Signalprozessor DSP zur Verarbeitung der Nutzdaten sowie einen Mikroprozessor 11 zur Steuerung des Hochfrequenzbauteils 3 mittels der Konfigurationsdaten. Des Weiteren wird mit diesem Mikroprozessor 11 die Ablaufsteuerung gesteuert. Das Hochfrequenzbauteil 3 umfasst im vorliegenden Ausführungsbeispiel einen Leistungsverstärker 31. Dieser Leistungsverstärker kann auch als externes Bauteil realisiert und vom Hochfrequenzbauteil 3 getrennt sein. Am Leistungsverstärker 31 ist ausgangsseitig eine Antenne 4 angeschlossen, welche zur Übertragung hochfrequenter modulierter Signale ausgebildet ist. Die Vorrichtung ist im dargestellten Ausführungsbeispiel als Sende- und Empfangsanordnung in einer Mobilstation ausgeführt. Die digitale Schnittstelle 2 zwischen dem Basisbandbauteil 1 und dem Hochfrequenzbauteil 3 umfasst eine erste digitale Mehrleiterverbindung, die zur Übertragung von zu sendenden Nutzdaten und von empfangenen Nutzdaten zwischen dem Basisbandbauteil 1 und dem Hochfrequenzbauteil 3 ausgelegt ist. Diese erste digitale Mehrleiterverbindung umfasst eine Datenleitung 21, die für eine bidirektionale Übertragung von Signalen ausgelegt ist. Über diese Datenleitung 21 werden die zu sendenden Nutzdaten und die empfangenen Nutzdaten übertragen. Die Nutzdaten werden somit über lediglich eine einzige Datenleitung übertragen. Es kann jedoch auch vorgesehen sein, dass die zu sendenden Nutzdaten über eine erste Datenleitung und die empfangenen Nutzdaten über eine zweite Datenleitung dieser ersten digitalen Mehrleiterverbindung übertragen werden. Die Datenleitung 21 kann auch als differentielle Signalleitung ausgebildet sein.

Des Weiteren umfasst die erste digitale Mehrleiterverbindung eine Bittaktleitung 22, die zur Übertragung eines Taktsignals ausgebildet ist, wobei je eine Taktperiode je einem Bit der Datenleitung 21 zugeordnet ist. Eine Worttaktleitung 23, die ebenfalls der ersten digitalen Mehrleiterverbindung zugeordnet ist, ist zum Anzeigen des Übermittlungsbeginns einer Folge von Bits auf der Datenleitung 21 ausgebildet. Die erste digitale Mehrleiterverbindung ist somit im Ausführungsbeispiel als 3-Leiterverbindung zwischen dem Basisbandbauteil 1 und dem Hochfrequenzbauteil 3 realisiert.

Des Weiteren umfasst die Sende- und Empfangsanordnung eine zweite digitale Mehrleiterverbindung, welche eine Datenleitung 24 aufweist, die im Ausführungsbeispiel als bidirektionale Datenleitung 24 ausgebildet ist. Über die bidirektionale Datenleitunng 24 werden Konfigurationsdaten vom Basisbandbauteil 1 zum Hochfrequenzbauteil 3 übertragen. Über diese bidirektionale Datenleitung 24 können auch Daten vom Hochfrequenzbauteil 3 an das Basisbandbauteil 1 übertragen werden, die bspw. vorab über ein spezielles Anforderungstelegramm vom Basisbandbauteil 1 angefordert wurden. Dieses spezielle Anforderungstelegramm kann beispielsweise dadurch gekennzeichnet sein, dass ein Bit im Adressteil zur Anzeige dient, dass auf die Adresse nicht schreibend, sondern lesend zugegriffen werden soll. Die zweite digitale Mehrleiterverbindung umfasst ebenfalls eine Bittaktleitung 25, die zur Übertragung eines Taktsignals ausgebildet ist, wobei auch hier je eine Taktperiode je einem Bit der Datenleitung 24 zugeordnet ist. Ferner umfasst die zweite digitale Mehrleiterverbindung eine Worttaktleitung 26, die zum Anzeigen des Übermittlungsbeginns einer Folge von Bits auf der Datenleitung 24 ausgebildet ist.

In der in Fig. 1 dargestellten Ausführungsform der Erfindung ist somit das Basisbandbauteil 1 zum Verarbeiten eines Empfangssignals sowie zum Verarbeiten eines Basisbandsignals ausgebildet. Ebenso ist das Hochfrequenzbauteil 3 zum Umsetzen des Empfangssignals in ein Basisbandsignal als auch zum Umsetzen eines Basisbandsignals in ein hochfrequentes Sendesignal ausgelegt. Die Schnittstelle des Sendepfades und des Empfangspfades ist vollständig digital ausgebildet und sowohl die erste als auch die zweite Mehrleiterverbindung zur bidirektionalen Signalübertragung ausgelegt.

Die Bittaktleitung 22 und die Worttaktleitung 23 der ersten digitalen Mehrleiterverbindung sind zur Signalübertragung vom Hochfrequenzbauteil 3 zum Basisbandbauteil 1 ausgelegt. Die Bittaktleitung 25 und die Worttaktleitung 26 der zweiten digitalen Mehrleiterverbindung sind zur Signalübertragung vom Basisbandbauteil 1 zum Hochfrequenzbauteil 3 ausgelegt. Die Synchroni-sationsleitung 27 sowie die digitale Signalleitung 28 sind als unidirektionale Datenleitungen ausgelegt und zur Signalübertragung vom Basisbandbauteil 1 zum Hochfrequenzbauteil ausgebildet.

Aufgrund der vollständig digitalen Ausführung der Schnittstelle 2 kann das Basisbandbauteil 1 vorteilhafter Weise vollständig in digitaler Schaltungstechnik realisiert sein. Darüber hinaus erlaubt die vollständige Trennung der jeweils digitalen Nutzdaten- von der Konfigurationsdatenübertragung einen erheblich vereinfachten Aufbau des Basisbandbauteils 1. Dies wird dadurch ermöglicht, dass keine Verkoppelung von vom digitalen Signalprozessor DSP und von vom Mikroprozessor 11 bereitgestellten Daten erfolgt. Ferner entfällt die im Basisbandbauteil übliche hybride, d.h. teilweise analoge und teilweise digitale Schaltungstechnik im Empfangspfad und im Sendepfad. Indem die erste und die zweite digitale Mehrleiterverbindung jeweils nur eine Datenleitung 21 und 24 aufweisen und die gesamte Vorrichtung nur eine Synchronisationsleitung 27 und eine digitale Signalleitung 28 zum Unterbrechen oder Auslösung einer Signalübertragung aufweist, kann die Vorrichtung mit einer minimierten Anzahl an Pins der beteiligten Chips realisiert werden.

In Fig. 2 ist eine beispielhafte Darstellung von Signalverläufen der Datenleitung 21, der Bittaktleitung 22 und der Worttaktleitung 23 der ersten digitalen Mehrleiterverbindung dargestellt. Die serielle Übertragung der Daten - empfangene Nutzdaten, zu sendende Nutzdaten - über die Datenleitung 21 erfolgt dabei in Telegrammen organisiert, wobei im vorliegenden Ausführungsbeispiel ein Telegramm aus 16 seriell angeordneten Bits besteht. Dabei wird das höchstwertigste Bit (MSB, Most Significant Bit) zuerst und das niederwertigste Bit (LSB, Least Significant Bit) zuletzt übertragen. Das höchstwertige Bit dient im vorliegenden Ausführungsbeispiel zur Kennzeichnung, ob die 15 niederwertigeren Bits Nutzinformationen enthalten. Es wird somit gekennzeichnet, ob es sich um Modulationsbits zum Modulieren einer Trägerschwingung im Hochfrequenzbauteil 3 oder Kontrollinformationen, also Daten zur Steuerung der seriellen Übertragung oder der Art der seriellen Übertragung und das Transportformat der Nutzdaten, handelt, also letztendlich ob es sich um Modulationsbits für Gauß'sches Minimum-Shift-Keying, EDGE oder andere Modulationsarten handelt. Jeweils mit einer fallenden Taktflanke des periodischen Taktsignals der Bittaktleitung 22, des sogenannten Bit-Takts, wird je ein Modulationsbit der Datenleitung 21 in das Hochfrequenzbauteil 3 hinein getaktet. Das Worttaktsignal der Worttaktleitung 23 legt den Beginn der Übertragung eines Telegramms dadurch fest, dass zugleich mit einem Worttakt-Impuls eine fallende Taktflanke im Bit-Takt erfolgt. Die Datenübertragung beginnt dann mit der darauf folgenden abfallenden Taktflanke des Bit-Takts. Sowohl die empfangenen Nutzdaten als auch die zu sendenden Nutzdaten werden gemäß dem in Fig. 2 dargestellten Schema vom Hochfrequenzbauteil 3 zum Basisbandbauteil 1 bzw. vom Basisbandbateil 1 zum Hochfrequenzbauteil 3 übertragen.

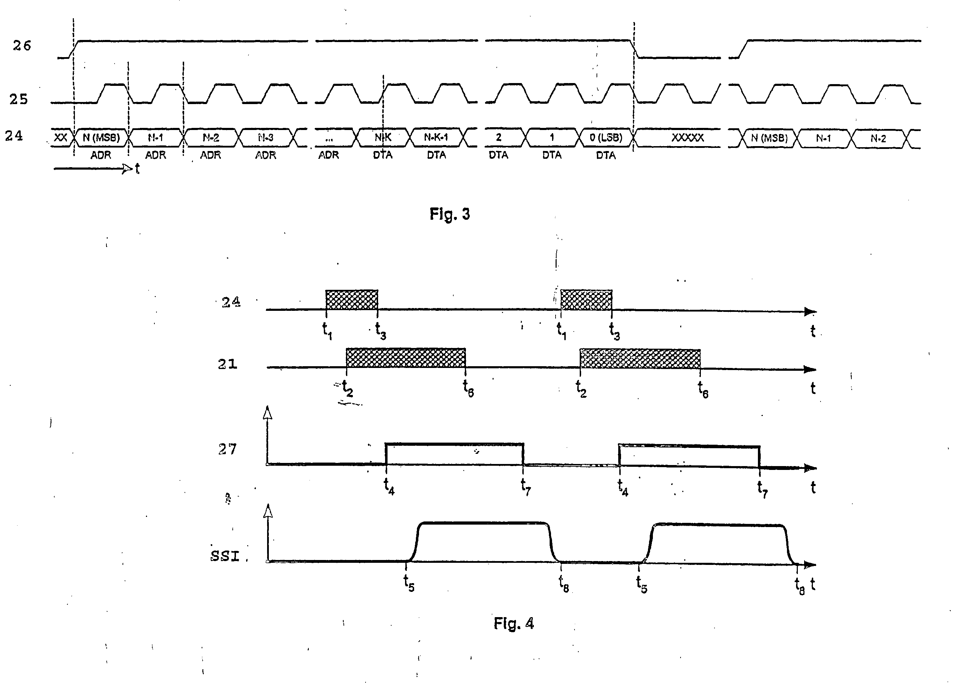

In Fig. 3 ist ein zeitlicher Verlauf der Signale der Datenleitung 24, der Bittaktleitung 25 und der Worttaktleitung 26 der zweiten digitalen Mehrleiterverbindung dargestellt. Auch die zweite digitale Mehrleiterverbindung ist zur seriellen Datenübertragung über die bidirektionale Datenleitung 24 ausgelegt. Über die Worttaktleitung 26 wird eine Bausteinselektion durchgeführt, mit der der Konfigurationsdaten empfangende Hochfrequenzbauteil 3 oder eine Teilschaltung desselben aktivierbar ist. Auch das Übertragungsprotokoll der Konfigurationsdaten über die Datenleitung 24 erfolgt telegrammorganisiert, wobei die Telegramme entweder Einzeltelegramme oder ein Verbund aus unmittelbar aufeinander folgenden Telegrammen sein können. Ein Telegramm besteht dabei aus einer definierten Anzahl N+1 Bits, beispielsweise 24 Bits, und setzt sich zusammen aus einem Adressteil und einem Datenteil. Der Adressteil umfasst dabei K Bits und ist mit ADR bezeichnet, während der Datenteil mit DTA bezeichnet ist und N-K+1 Bit umfasst. Bei einem Telegrammverbund, welcher Daten zu aufeinander folgenden Adressen sendet, kann der Adressteil entfallen, falls die Anfangsadresse dem Empfänger bekannt ist. Die Adresse bestimmt dann den Zielort, beispielsweise einen Funktionsblock, an den die Daten im Hochfrequenzbauteil 3 übertragen werden sollen. Für die Übertragung eines Telegrammverbunds, kann ein spezielles Konfigurationstelegramm verwendet werden, das vor Beginn eines Telegrammverbunds den Beginn, die Länge und die Start-/Zieladresse des Verbunds festlegt. Ein Telegrammverbund dient beispielsweise dazu, die Grundkonfiguration der Sendeanordnung zeiteffizient einzustellen. Bei der Übertragung von Einzeltelegrammen bestimmt der Zeitpunkt der Telegrammübertragung im Allgemeinen auch den Zeitpunkt des Aktivierens der neuen Einstellung bzw. der Konfiguration der Sende- und Empfangsanordnung. Über die bidirektionale Datenleitung 24 können auch Daten vom Hochfrequenzbauteil 3 an den Basisbandbauteil 1 übertragen werden, die zuvor über ein spezielles Anforderungstelegramm vom Basisbandbauteil 1 angefordert wurden. Dieses Anforderungstelegramm kann beispielsweise derart ausgebildet sein, dass ein Bit im Adressteil zur Anzeige dient, um auf die Adresse nicht schreibend sondern lesend zuzugreifen.

Wie anhand der Figuren 2 und 3 in der Zusammenschau mit dem Blockschaltbild in Fig. 1 zu erkennen ist, kann der Mikroprozessor 11 zu von ihm festgelegten Zeitpunkten unabhängig von einer Nutzdatenübertragung Sendeparameter an das Hochfrequenzbauteil 3 übertragen, ohne dass hierdurch der digitale Signalprozessor DSP beeinflusst oder gar dessen Verarbeitung oder Übertragung von Nutzdaten unterbrochen werden muss. Daraus resultiert eine wesentliche Vereinfachung des zeitlichen Ablaufs sowie der Ablaufsteuerung im Basisbandbauteil 1.

In Fig. 4 ist der Zusammenhang zwischen der Übertragung von Nutzdaten, Konfigurationsdaten und Synchronisationsdaten sowie der prinzipielle Verlauf der Sendeleistung eines GSMkonformen Sendesignals von Fig. 1 dargestellt. Die zu sendenden Nutzdaten oder die empfangenen Nutzdaten werden dabei über die erste digitale Mehrleiterverbindung (Datenleitung 21, Bittaktleitung 22 und Worttaktleitung 23) übertragen. Die Konfigurationsdaten werden über die zweite digitale Mehrleiterverbindung (Datenleitung 24, Bittaktleitung 25 und Worttaktleitung 26) übertragen. Die Synchronisationsinformation werden über die Synchronisationsleitung 27 übertragen. Zunächst wird das Hochfrequenzbauteil 3 über die digitale Signalleitung 28 (Fig. 1) aktiviert und alle für das Senden erforderlichen Konfigurationsdaten über die Datenleitung 24 der zweiten digitalen Mehrleiterverbindung an das Hochfrequenzbauteil 3 übertragen. Sind ausreichend viele Modulationsbits in den Ausgangspuffer des Basisbandbauteils 1 geschrieben, kann dem Hochfrequenzbauteil 3 über die Synchronisationsleitung 27 ein Startsignal gegeben werden, um die Modulationsdaten aus dem Basisbandbauteil 1 anzufordern und mit der Modulation und dem Senden zu beginnen. Eine steigende Flanke kennzeichnet beispielsweise den Sendebeginn und eine abfallende Flanke ein Ende eines Sendezeitschlitzes (Burst). In den in Fig. 4 dargestellten Zeitabläufen von Signalen kennzeichnet der Zeitpunkt t₁ den Beginn der Übertragung von Konfigurationsdaten und der Zeitpunkt t₃ das Ende der Übertragung dieser Konfigurationsdaten. Der Zeitpunkt t₂ bezeichnet den Beginn der Übertragung von Nutzinformationen (empfangene Nutzdaten oder zu sendende Nutzdaten) und der Zeitpunkt t₆ das Ende der Übertragung dieser Nutzinformationen. In dem Signalverlauf der Synchronisationsleitung 27 bezeichnet der Zeitpunkt t₄ den Start des Modulators und der Zeitpunkt t₇ das Einleiten eines Sendeimpulsendes. Des Weiteren ist im Signalverlauf des Sendesignals SSI der Zeitpunkt t₅ eingezeichnet, welcher den Beginn einer Aufwärts-Leistungsrampe charakterisiert und ein Zeitpunkt t₈ dargestellt, welcher das Ende einer Abwärts-Leistungsrampe kennzeichnet. In entsprechender Weise werden auch die Empfangssignale des Empfangspfads durch die in Fig. 1 dargestellten Komponenten verarbeitet und können entsprechend den Signalverläufen in Fig. 4 zeitlich abfolgen.

Die erfindungsgemäße Vorrichtung kann als Empfangsanordnung oder als Sende- und Empfangsanordnung ausgebildet sein. Wesentlich ist, dass im Falle eines Vorliegens einer Empfangsanordnung die Schnittstelle des Empfängspfads digital ausgeführt ist. Ist die Vorrichtung als Sende- und Empfangsanordnung ausgebildet, ist sowohl die Schnittstelle des Sendepfads als auch die Schnittstelle des Empfangspfads digital ausgelegt. In diesem Fall ist in vorteilhafter Weise die erste und die zweite Mehrleiterverbindung zur bidirektionalen Datenübertragung ausgelegt. Die zu sendenden Nutzdaten und die empfangenen Nutzdaten werden durch die bidirektionale Datenleitung der ersten digitalen Mehrleiterverbindung wischen dem Basisbandbauteil 1 und dem Hochfrequenzbauteil 3 übertragen. In ebensolcher Weise werden die Konfigurationsdaten über die bidirektionale Datenleitung 24 der zweiten digitalen Mehrleiterverbindung übertragen.

## Patentansprüche

1. Empfangs- und Sendeanordnung für Mobilfunk, mit
- einem Basisbandbauteil (1) zum Verarbeiten eines in ein erstes Basisbandsignal umgesetzten Empfangssignals oder eines zweiten Basisbandsignals mit einem zur digitalen Datenübertragung ausgebildeten Ein-/Ausgang,
- einem Hochfrequenzbauteil (3) zum Umsetzen des Empfangssignals in das erste Basisbandsignal oder zum Umsetzen des verarbeiteten zweiten Basisbandsignals in ein Sendesignal, mit einem zur digitalen Datenübertragung ausgebildeten Ein-/Ausgang, der mit dem Ein-/Ausgang des Basisbandbauteils (1) zur digitalen Übertragung von zu empfangenden Nutzdaten elektrisch verbunden ist,
- einer ersten digitalen Mehrleiterverbindung (21, 22, 23) zur Übertragung der empfangenen Nutzdaten von dem Hochfrequenzbauteil (3) zum Basisbandbauteil (1) und der zu sendenden Nutzdaten von dem Basisbandbauteil (1) zu dem Hochfrequenzbauteil (3), und
- einer zweiten digitalen Mehrleiterverbindung (24, 25, 26) zur Übertragung von Konfigurationsdaten von dem Basisbandbauteil (1) zum Hochfrequenzbauteil (3), wobei die erste (21, 22, 23) und die zweite digitale Mehrleiterverbindung (24, 25, 26) mit dem Ein-/Ausgang des Hochfrequenzbauteils (3) und dem Ein-/Ausgang des Basisbandbauteils (1) verbunden sind,
- einer Synchronisationsleitung (27) für eine unidirektionale Datenübertragung von dem Basisbandbauteil (1) zu dem Hochfrequenzbauteil (3), und
- einer digitalen Signalleitung (28) für eine unidirektionale Datenübertragung von dem Basisbandbauteil (1) zu dem Hochfrequenzbauteil (3),
**gekennzeichnet durch**
- einen in dem Basisbandbauteil (1) enthaltenen Ausgangspuffer, wobei
- die Anordnung derart eingerichtet ist, dass für einen Sendevorgang das Hochfrequenzbauteil (3) über die digitale Signalleitung (28) aktiviert und alle für das Senden erforderlichen Konfigurationsdaten über eine Datenleitung (24) der zweiten Mehrleiterverbindung (24, 25, 26) an das Hochfrequenzbauteil (3) übertragen werden und sobald eine bestimmte Menge Datenbits in den Ausgangspuffer des Basisbandbauteils (1) geschrieben sind, dem Hochfrequenzbauteil (3) über die Synchronisationsleitung (27) ein Startsignal übermittelt wird, um die Datenbits aus dem Ausgangspuffer des Basisbandbauteils (1) anzufordern und in das Sendesignal umzusetzen.

2. Anordnung nach Anspruch 1,
**dadurch gekennzeichnet, dass**
- die erste digitale Mehrleiterverbindung (21, 22, 23)
- - zumindest eine Datenleitung (21) aufweist, die zur seriellen Übertragung der empfangenen Nutzdaten ausgebildet ist,
- - eine Bittaktleitung (22) umfasst, die zur Übertragung eines Taktsignals ausgebildet ist, wobei je eine Taktperiode je einem Bit der Datenleitung (21) zugeordnet ist, und
- - eine Worttaktleitung (23) umfasst, die zum Anzeigen des Übermittlungsbeginns einer Folge von Bits auf der Datenleitung (21) ausgebildet ist.

3. Anordnung nach Anspruch 1 oder 2,
**dadurch gekennzeichnet, dass**
- die zweite digitale Mehrleiterverbindung (24, 25, 26)
- - zumindest eine Datenleitung (24) aufweist, die zur seriellen Übertragung der Konfigurationsdaten ausgebildet ist,
- - eine Bittaktleitung (25) umfasst, die zur Übertragung eines Taktsignals ausgebildet ist, wobei je eine Taktperiode je einem Bit der Datenleitung (24) zugeordnet ist, und
- - eine Worttaktleitung (26) umfasst, die zum Anzeigen des Übermittlungsbeginns einer Folge von Bits auf der Datenleitung (24) ausgebildet ist.

4. Anordnung nach einem der vorhergehenden Ansprüche,
**dadurch gekennzeichnet, dass**
die Ein-/Ausgänge des Basisbandbauteils (1) und des Hochfrequenzbauteils (3) für eine bidirektionale Datenübertragung ausgelegt sind.

5. Anordnung nach einem der vorhergehenden Ansprüche,
**dadurch gekennzeichnet, dass**
die erste (21, 22, 23) und die zweite Mehrleiterverbindung (24, 25, 26) für eine bidirektionale Signalübertragung ausgebildet sind.

6. Anordnung nach einem der vorhergehenden Ansprüche,
**dadurch gekennzeichnet, dass**
- die Datenleitung (21) der ersten Mehrleiterverbindung (21, 22, 23) bidirektional ausgebildet ist, und zusätzlich zur seriellen Übertragung von zu sendenden Nutzdaten ausgelegt ist, und
- die Datenleitung (24) der zweiten Mehrleiterverbindung (24, 25, 26) bidirektional ausgebildet ist, und zusätzlich zur seriellen Übertragung von Konfigurationsdaten ausgebildet ist.

7. Anordnung nach einem der vorhergehenden Ansprüche,
**dadurch gekennzeichnet, dass**
mindestens eine Signalverbindung zwischen dem Basisbandbauteil (1) und dem Hochfrequenzbauteil (3), insbesondere die Datenleitung (21) der ersten digitalen Mehrleiterverbindung (21, 22, 23), als differentielle Signalleitung ausgebildet ist.

8. Anordnung nach einem der vorhergehenden Ansprüche,
**dadurch gekennzeichnet, dass**
für mindestens eine Signalverbindung zwischen dem Basisbandbauteil (1) und dem Hochfrequenzbauteil (3), insbesondere für die Datenleitung (21) der ersten digitalen Mehrleiterverbindung (21, 22, 23) ein Signalflanken- oder Signalimpulsformungsverfahren verwendet wird.

9. Mobilstation mit einer Anordnung nach einem der Ansprüche 1 bis 8, die zur Kommunikation, insbesondere zur drahtlosen Übertragung von Signalen, mit einer Basisstation ausgelegt ist.

## Claims

1. A receiving and transmitting arrangement for mobile radio, comprising:
- a baseband component (1) for processing a reception signal converted to a first baseband signal or a second baseband signal with an input/output configured for digital data transmission,
- a radiofrequency component (3) to convert the reception signal into the frist baseband signal or to convert the processed second baseband signal to a transmission signal with an input/output configured for digital data transmission and electrically coupled to the input/output of the baseband component (1) for digital transmission of the useful data to be received,
- a first multiconductor connection (21, 22, 23) to transmit the useful data received from the radiofrequency component (3) to the baseband component (1) and the useful data from the baseband component (1) to the radiofrequency component (3), and
- a second digital multiconductor connection (24, 25, 26) to transmit configuration data from the baseband component (1) to the radiofrequency component (3), wherein the first (21, 22, 23) and the second digital multiconductor connection (24, 25, 26) are coupled with the input/output of the radiofrequency component (3) and the input/output of the baseband component (1),
- a synchronization line (27) for unidirectional data transmission from the baseband component (1) to the radiofrequency component (3), and
- a digital signal line (28) for a unidirectional data transmission from the baseband component (1) to the radiofrequency component (3),
**characterized by**
- an output buffer contained in the baseband component (1), wherein
- the arrangement is set up so that the radiofrequency component (3) is activated by way of the signal line (28) for a sending process and all the configuration data required for the transmission are transmitted to the radiofrequency component (3) by way of a data line (24) of the second multiconductor connection (24, 25, 26) and as soon as a predetermined quantity of data bits have been written to the output buffer of the baseboard component (1), a start signal is communicated to the radiofrequency component (3) via the synchronization line (27) in order to request the data bits from the output buffer of the baseband component (1) and to convert them to the transmission signal.

2. Arrangement of Claim 1,
**characterized in that**
- the first multiconductor connection (21, 22, 23)
- - has at least one data line (21) configured for serial transmission of the useful data received,
- - comprises a bit clock line (22) that is configured for transmission of a clock signal, whereby each clock period is assigned to one bit of the data line (21), and
- - comprises a word clock line (23) that is configured to display the start of transmission of a sequence of bits on the data line (21).

3. Arrangement of Claim 1 or 2,
**characterized in that**
- the second multiconductor connection (24, 25, 26)
- - has at least one data line (24) configured for serial transmission of the configuration data,
- - comprises a bit clock line (25) that is configured for transmission of a clock signal, whereby each clock period is assigned to one bit of the data line (24), and
- - comprises a word clock line (26) that is configured to display the start of transmission of a sequence of bits on the data line (24).

4. Arrangement according to one of the preceding claims,
**characterized in that**
the inputs/outputs of the baseband component (1) and the radiofrequency component (3) are configured for bidirectional data transmission.

5. Arrangement according to one of the preceding claims,
**characterized in that**
the first (21, 22, 23) and the second (24, 25, 26) multiconductor connections are configured for bidirectional signal transmission.

6. Arrangement according to one of the preceding claims,
**characterized in that**
- the data line (21) of the first multiconductor connection (21, 22, 23) is configured bidirectionally and is additionally configured for serial transmission of useful data to be transmitted, and
- the data line (24) of the second multiconductor connection (24, 25, 26) is configured bidirectionally and is additionally configured for serial transmission of configuration data.

7. Arrangement according to one of the preceding claims,
**characterized in that**
at least one signal connection between the baseband component (1) and the radiofrequency component (3), especially the data line (21) of the first digital multiconductor connection (21, 22, 23), is configured as a differential signal line.

8. Arrangement according to one of the preceding claims,
**characterized in that**
the baseband component (1) and the radiofrequency component (3) are
both configured to employ a signal edge- or signal pulse-shaping protocol, especially for the data line (21) of the first digital multiconductor connection (21, 22, 23).

9. Mobile station with an arrangement according to one of Claims 1 to 8 that is configured with a base station for communication, especially for wireless transmission of signals.

## Revendications

1. Dispositif émetteur et récepteur pour radiocommunication mobile, comprenant
- un composant bande de base (1) destiné à traiter un signal de réception *converti en un premier signal de bande de base* ou un *deuxième* signal de bande de base par le biais d'une entrée/sortie conçue pour la transmission numérique de données,
- un composant haute fréquence (3) destiné à convertir le signal de réception en *ledit premier* signal de bande de base ou à convertir *le deuxième* signal de bande de base *traité* en un signal d'émission, par le biais d'une entrée/sortie conçue pour la transmission numérique de données qui est couplée par voie électrique à l'entrée/sortie du composant bande de base (1) pour la transmission numérique de données utiles à recevoir,
- une première liaison multiconducteur numérique (21, 22, 23) destinée à transmettre les données utiles reçues, du composant haute fréquence (3) au composant bande de base (1) et les données utiles à envoyer, du composant bande de base (1) au composant haute fréquence (3) et
- une deuxième liaison multiconducteur numérique (24, 25, 26) destinée à transmettre des données de configuration, du composant bande de base (1) au composant haute fréquence (3), la première (21, 22, 23) et la deuxième (24, 25, 26) liaisons multiconducteurs numériques étant couplées à l'entrée/sortie du composant haute fréquence (3) et à l'entrée/sortie du composant bande de base (1),
- une ligne de synchronisation (27) pour une transmission de données unidirectionnelle, du composant bande de base (1) au composant haute fréquence (3), et
- une ligne de signaux numériques (28) pour une transmission de données unidirectionnelle, du composant bande de base (1) au composant haute fréquence (3),
**caractérisé par**
- un tampon de sortie contenu dans le composant bande de base (1), où
- le dispositif est agencé de manière à ce que, pour une opération d'émission, le composant haute fréquence (3) soit activé via une ligne de signaux numériques (28) et toutes les données de configuration nécessaires à l'émission soient transmises au composant haute fréquence (3) via une ligne de données (24) de la deuxième liaison multiconducteur (24, 25, 26) et, dès qu'une certaine quantité de bits de données a été écrite dans le tampon de sortie du composant bande de base (1), un signal de départ soit communiqué au composant haute fréquence (3) via la ligne de synchronisation (27) pour solliciter l'extraction des bits de données du tampon de sortie du composant bande de base (1) et leur conversion en ledit signal d'émission.

2. Dispositif selon la revendication 1,
**caractérisé en ce que**
- la première liaison multiconducteur numérique (21, 22, 23) comprend
- - au moins une ligne de données (21) conçue pour la transmission séquentielle des données utiles reçues,
- - une ligne d'horloge de bit (22) conçue pour la transmission d'un signal d'horloge, une période d'horloge étant respectivement associée à un bit de la ligne de données (21) et
- - une ligne d'horloge de mot (23) conçue pour indiquer le début de la transmission d'une suite de bits sur la ligne de données (21).

3. Dispositif selon la revendication 1 ou 2,
**caractérisé en ce que**
- la deuxième liaison multiconducteur numérique (24, 25, 26) comprend
- - au moins une ligne de données (24) conçue pour la transmission séquentielle des données de configuration,
- - une ligne d'horloge de bit (25) conçue pour la transmission d'un signal d'horloge, une période d'horloge étant respectivement associée à un bit de la ligne de transmission de données (24), et
- - une ligne d'horloge de mot (26) conçue pour indiquer le début de la transmission d'une suite de bits sur la ligne de données (24).

4. Dispositif selon l'une des revendications précédentes, **caractérisé en ce que** les entrées/sorties du composant bande de base (1) et du composant haute fréquence (3) sont conçues pour une transmission bidirectionnelle de données.

5. Dispositif selon l'une des revendications précédentes, **caractérisé en ce que** la première (21, 22, 23) et la deuxième (24, 25, 26) liaisons multiconducteurs sont conçues pour une transmission bidirectionnelle de signaux.

6. Dispositif selon l'une des revendications précédentes, **caractérisé en ce que**
- la ligne de données (21) de la première liaison multiconducteur (21, 22, 23) est conçue de manière bidirectionnelle et, en outre, de manière à permettre la transmission séquentielle de données utiles à envoyer, et
- la ligne de données (24) de la deuxième liaison multiconducteur (24, 25, 26) est conçue de manière bidirectionnelle et, en outre, de manière à permettre la transmission séquentielle de données de configuration.

7. Dispositif selon l'une des revendications précédentes, **caractérisé en ce qu'**au moins une liaison par signaux entre le composant bande de base (1) et le composant haute fréquence (3), notamment la ligne de données (21) de la première liaison multiconducteur numérique (21, 22, 23), est conçue sous la forme d'une ligne différentielle de signaux.

8. Dispositif selon l'une des revendications précédentes, **caractérisé en ce qu'**on utilise, pour au moins une liaison par signaux entre le composant bande de base (1) et le composant haute fréquence (3), notamment pour la ligne de données (21) de la première liaison multiconducteur numérique (21, 22, 23), un procédé de production de flancs de signaux ou d'impulsions de signaux.

9. Station mobile comportant un dispositif selon l'une des revendications 1 à 8 conçue à des fins de communication, notamment de transmission sans fil de signaux, avec une station de base.
